# EUROPEAN PATENT SPECIFICATION

(11) **EP 3 351 755 B1**
(45) Date of publication and mention of the grant of the patent: **03.03.2021**
(21) Application number: 18152048.7
(22) Date of filing: 17.01.2018
(51) Int. Cl.: F01M 1/10, F01M 1/16, F16N 13/04, F16N 13/10, F16N 39/06, F01M 1/02

(54) **OIL SYSTEM WITH CLOG RESISTANT OIL FILTER**
ÖLSYSTEM MIT VERSTOPFUNGSRESISTENTEM ÖLFILTER
SYSTÈME D'HUILE AVEC FILTRE À HUILE RÉSISTANT AU BOUCHAGE

(30) Priority: 19.01.2017 GB 201700951
(43) Date of publication of application: 25.07.2018
(73) Proprietor: Ford Global Technologies, LLC, Dearborn, MI 48126 (US)
(72) Inventor: PETRIDIS, Themi Philemon, Bishop's Stortford, Hertfordshire CM23 3NG (GB); CHATTERJI, Gautam, Basildon, Essex SS15 4EY (GB)
(74) Representative: Haseltine Lake Kempner LLP

(56) References cited:
- JP-A- H0 777 174
- US-A1- 2006 104 823
- US-A1- 2013 255 617
- US-A1- 2015 218 983

## Description

### Field

The present description relates generally to methods and systems for oil filters, oil pumps and variable displacement oil pumps.

### Background

Oil systems for motor vehicles typically comprise an oil pump configured to circulate oil from an oil sump of the engine to pressure lubricated components of the engine. The components require a pressurized oil feed in order to cool and lubricate the engine components. The oil pump may be a fixed displacement oil pump configured such that the pressure of oil output by the pump varies according to a running speed of an engine of the motor vehicle. Alternatively, the oil pump may be a variable displacement oil pump configured such that the pressure of oil output by the pump is substantially maintained within preset limits independent of the engine running speed.

The variable displacement oil pump may comprise a pressure regulation mechanism configured to vary the displacement of the oil pump in order to regulate the pressure of oil output by the pump. It is desirable to ensure that the pressure regulation mechanism of the pump continues operating effectively throughout the life of the oil pump to ensure that the oil pump continues to supply oil to the components.

The inventors herein have recognized potential issues with conventional oil filters. Oil filters remove harmful contaminants from oil to protect components of the oil system from wear or degradation. Oil filters may become clogged by these contaminants and not allow oil to pass. Oil may not be able to flow through a filter if an alternative path around clogging particulates is not available. One example of a conventional filter is a circular filter within a circular oil passage. US2013/255617 A1 discloses another example of a filter placed in a variable displacement oil pump.

Particulates may build up on the filter blocking the entire passage and preventing flow of oil.

### Statements of Invention

In one example, the issues described above may be addressed by a system for a variable displacement oil pump for a motor vehicle, the oil pump comprising: a mechanism for adjusting the displacement of the pump, the mechanism including an oil port formed in an internal wall of the pump, the oil port having a filter wherein a filter surface area of the filter is spaced apart from an inlet of the oil port, wherein the filter surface area is larger than an area of the inlet, wherein the filter is substantially prism shaped and wherein the filter surface area forms an outer surface of the prism. In this way, the larger surface area of the filter surface area and the prism shape of the filter allow for oil to pass around possible particulates and into the inlet.

As one example, a rectangular prism shaped oil filter is positioned over an oil port. The filter has a greater surface area than the inlet port. The prism shape also allows oil to flow through the interior of the prism shape. Thus, if particulates clog part of the filter surface area, oil can flow through a different surface area, into the space between the filter surface area and inlet, and into the inlet. Therefore, the filter may still allow oil to flow in the presence of clogging particulates.

According to an arrangement of the present disclosure, there is provided an oil pump, e.g. a variable displacement oil pump, for a motor vehicle the oil pump comprising: a mechanism for adjusting the displacement of the pump, the mechanism comprising an oil port formed in an internal wall of the pump, the oil port having a filter wherein a filter element of the filter is spaced apart from an opening of the oil port and wherein the filter element is larger than an area of the opening.

The filter element may comprise the portion of the surface of the unblocked filter through which oil passes (eg the filtering surface). The filter element may be integrally formed with or permanently attached to the filter.

Thus, in accordance with the invention, the filtering surface (comprising an area of the filter element through which the oil passes) may be larger than the area of the opening.

According to another aspect of the present disclosure, there is provided a rotary machine for a motor vehicle, the rotary machine comprising an oil port formed in an internal wall of the rotary machine, the oil port having a filter, wherein an oil admitting area of a filter element of the filter is larger than an area of the opening. The filter element may be spaced apart from an opening forming the oil port. The rotary machine may comprise a pump such as an engine oil pump. Where the pump is a variable displacement pump, the oil port may admit oil to the mechanism that varies the displacement of the pump. The mechanism may, for example, comprise an internal valve.

According to another aspect of the present disclosure, there is provided a rotary machine for a motor vehicle, the rotary machine comprising an oil port formed in an internal wall of the rotary machine, the oil port having a filter, wherein a filter element of the filter is spaced apart from an opening forming the oil port. An oil admitting area of the filter element may be larger than an area of the opening. The rotary machine may comprise a pump such as an engine oil pump. Where the pump is a variable displacement pump, the oil port may admit oil to the mechanism that varies the displacement of the pump. The mechanism may, for example, comprise an internal valve.

The filter may be arranged such that oil may pass through the filter element prior to flowing through the oil port. The filter element may comprise a mesh, e.g. a metallic mesh. Additionally or alternatively, the filter element may comprise felt or paper and/or be formed of any other material capable of filtering the oil. The internal wall may be defined in a housing of the oil pump. The oil port may be arranged such that a portion of the oil pumped by the oil pump passes through the oil port, e.g. to the mechanism for adjusting the displacement of the pump.

The filter may be supported by the oil pump away from the opening of the oil port, e.g. by the housing of the oil pump. In some arrangements, the filter may be supported by the internal wall.

The filter may be press fit, glued, threaded and/or clipped to the oil pump, e.g. to the housing and/or the internal wall.

The filter is substantially prism shaped. For example, the filter may form a regular prism, such as a square prism, or an irregular prism. The filter element forms an outer surface of the prism.

The filter may comprise a longitudinal slot provided within an outer surface of the prism. The filter may be compressible by reducing a width of the slot, e.g. during installation of the filter into the pump. The filter may be compressed in order to allow the filter to be installed into the oil pump. Compressing the filter may reduce a cross-sectional area of the prism. The filter element may not be provided at or over the longitudinal slot.

The filter may be arranged such that oil does not pass though the longitudinal slot prior to passing through the filter element. In other words, oil may pass though the filter element of the filter prior to passing through the longitudinal slot. For example, the filter may be arranged, such that both edges of the longitudinal slot contact a wall of the housing, e.g. the internal wall.

The filter may be arranged within the oil pump such that the longitudinal slot of the filter is substantially aligned with the oil port. For example, the filter may be arranged, such that the edges of the longitudinal slot contact a wall of the housing, e.g. the internal wall, on either side of the oil port.

The filter may be arranged such that a central/longitudinal axis of the filter, e.g. of the prismatic shape defined by the oil filter, is at an angle relative to a flow path defined by the oil port. For example, the oil filter may be arranged such that the central axis of the oil filter is at substantially 90 degrees to the flow path defined by the oil port.

The filter may be resilient. The filter may be configured to expand by virtue of its resilience in order to engage one or more walls of the pump, e.g. the internal wall and/or one or more other walls of the pump, such that the filter is supported within the pump. The filter may expand during installation of the filter. The filter may be compressed prior to installation into the pump and may expand during installation in order to engage the walls of the pump. During expansion of the filter, the width of the longitudinal slot formed in the outer surface of the filter may increase.

The housing of the pump may define a filter chamber portion configured to receive the filter. The filter chamber portion may be at least partially formed by the internal wall. The filter may be configured to engage two or more walls of the filter chamber portion, e.g. in order for the filter to be supported by the housing. For example, the filter may expand during installation of the filter to engage two or more walls of the filter chamber. The filter chamber portion may define a shoulder configured to abut the filter in order to retain the filter within the filter chamber portion. The shoulder may be a square, chamfered or rounded shoulder. The shape of the shoulder may correspond to the shape of the filter, e.g. at the position at which the shoulder abuts the filter.

The oil port may be configured to deliver oil to the mechanism for adjusting the displacement of the pump of the oil pump, in order to regulate the pressure of oil supplied by the pump.

The oil pump may comprise a pressure chamber. Displacement of the pump may vary according to a pressure of oil within the pressure chamber. The oil pump may comprise a further filter chamber. The displacement of the pump may vary according to a difference in pressure between the pressure chamber and the further pressure chamber.

The filter may be configured to filter oil within the pressure chamber. The filter may be configured to filter the oil passing into the pressure chamber. The filter may be provided within the pressure chamber. The oil port may be defined within the pressure chamber. The oil port may be configured to allow oil to flow out of the pressure chamber in order to affect the pressure of oil within the pressure chamber. The filter may be configured to filter the oil leaving the pressure chamber, e.g. via the oil port. The filter chamber portion may be defined within the pressure chamber.

The mechanism for adjusting the displacement of the pump may comprise a pressure regulation outlet downstream of the oil port. A flow area defined by the pressure regulation outlet may be varied by the mechanism for adjusting displacement of the pump according to an operating condition e.g. an outlet pressure of the oil pump, in order to regulate the pressure of oil supplied by the oil pump.

The oil pump may comprise a spool valve configured to vary the rate at which oil passes through the oil port according to an outlet pressure of the oil pump, e.g. in order adjust the operation of the oil pump to regulate the outlet pressure of the pump. In other words, the mechanism for adjusting the displacement of the pump may comprise the spool valve.

The spool valve may comprise a pressure regulation chamber and a spool, movable within the pressure regulation chamber. Oil passing though the oil port may flow into the pressure regulation chamber. The spool valve may further comprise a pressure regulation outlet configured to allow oil to flow out of the pressure regulation chamber. The position of the spool within the pressure chamber may be varied according to an outlet pressure of the oil pump, in order to vary a flow area of the pressure regulation outlet.

The spool valve may be configured such that the outlet pressure of the oil pump affects the position of the spool valve within the pressure regulation chamber. For example, the outlet of the oil pump may be in fluid communication with a pressure face of the spool. The spool may be biased, e.g. by a resilient element, such as a spring.

The flow area of the pressure regulation outlet may affect the pressure of the oil within the pressure chamber of the oil pump and thereby affect the operation of the oil pump, e.g. the outlet pressure of the oil pump. In other words, the spool valve and the pressure chamber of the oil pump may regulate the outlet pressure of the oil pump.

The spool valve may further comprise a low pressure set input. The spool valve may be configured to receive oil via the low pressure set input in order to adjust the position of the spool within the pressure regulation chamber and thereby adjust the operation of the oil pump, e.g. to adjust the outlet pressure of the oil pump. Providing oil to the low pressure set input may adjust a balance of forces acting on the spool, which may affect the regulated outlet pressure of the oil pump.

According to another aspect of the present disclosure, there is provided an oil pump for a motor vehicle, the oil pump comprising: a housing defining an oil port, wherein the oil port is arranged such that a portion of the oil passing through the oil pump passes through the oil port; and a filter provided within the housing, wherein the filter is configured such that oil passing though the oil port passes though the filter, wherein a filter element, which may comprise a mesh portion, is spaced apart from an opening of the oil port and wherein the an area of the filter element through which the oil passes is larger than an area of the opening.

A lubricating oil system for an engine of a motor vehicle may comprise: an oil sump; the above-mentioned oil pump, wherein the oil pump is configured to draw oil from the oil sump into an inlet of the oil pump and pump the oil out of an outlet of the oil pump; and an oil gallery configured to receive pressurised oil from the outlet of the oil pump. The oil gallery may be configured to deliver the pressurised oil to one or more pressure lubricated components of the engine.

The lubricating oil system may further comprise an oil filter operatively disposed between the outlet of the oil pump and the oil gallery. The oil filter may be configured to filter solid contaminants from the oil leaving the pump outlet.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

It should be understood that the summary above is provided to introduce in simplified form a selection of concepts that are further described in the detailed description. It is not meant to identify key or essential features of the claimed subject matter, the scope of which is defined uniquely by the claims that follow the detailed description.

### Brief Description of the Drawings

FIG. 1 is a schematic view of a lubricating oil system for a motor vehicle.
FIG. 2a is a schematic sectional views of an oil pump.
FIG. 2b is a schematic sectional views of an oil pump.
FIG. 3a shows an embodiment of a prism shaped oil filter.
FIG. 3b show operation of a prism shaped oil filter with accumulation of contaminants on the oil filter.
FIG. 4 is a schematic sectional view of an oil filter with a filter surface area greater than a port inlet area.
FIG. 5 is a schematic sectional view of an oil filter with longitudinal slot.
FIG. 6 is a view of a cylindrical embodiment of an oil filter, not according to the invention.
FIG. 7 is a view of an embodiment of a mounting location of an oil filter in variable displacement pump.
FIG. 8 is an oil circuit diagram of a potential embodiment.
FIG. 9 is a view of a conventional oil filter and mounting location.
FIG. 10 is a view of various mounting locations within oil pumps.

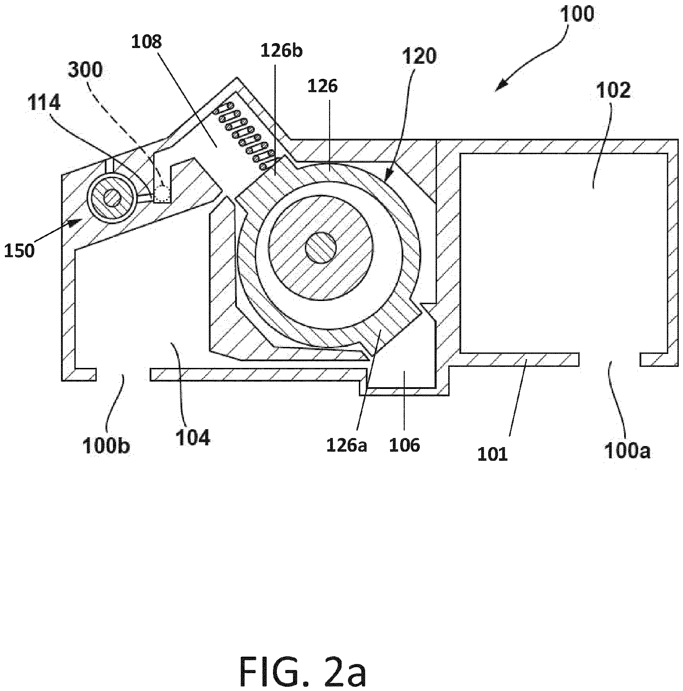

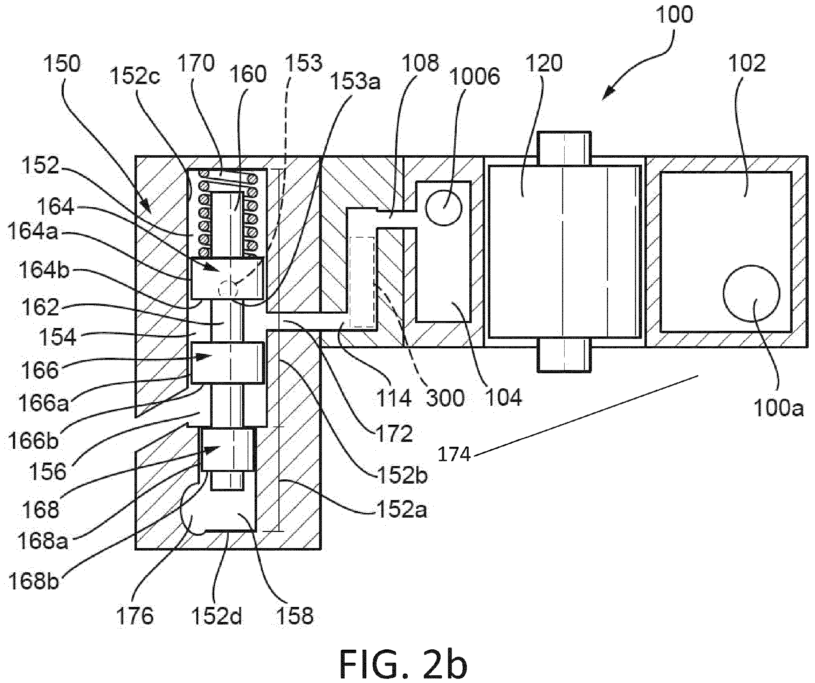

FIGS. 2-7, 9 and 10 are shown approximately to scale.

### Detailed Description

The following description relates to various embodiments of systems including oil filters that allow oil flow around clogging particulates. Features of these oil filters will also be described such as the oil filter shape, filter surface area, distance between filter surface area and inlet, and orientation of the filter. The figures will also demonstrate embodiments of the filter and features of the embodiments.

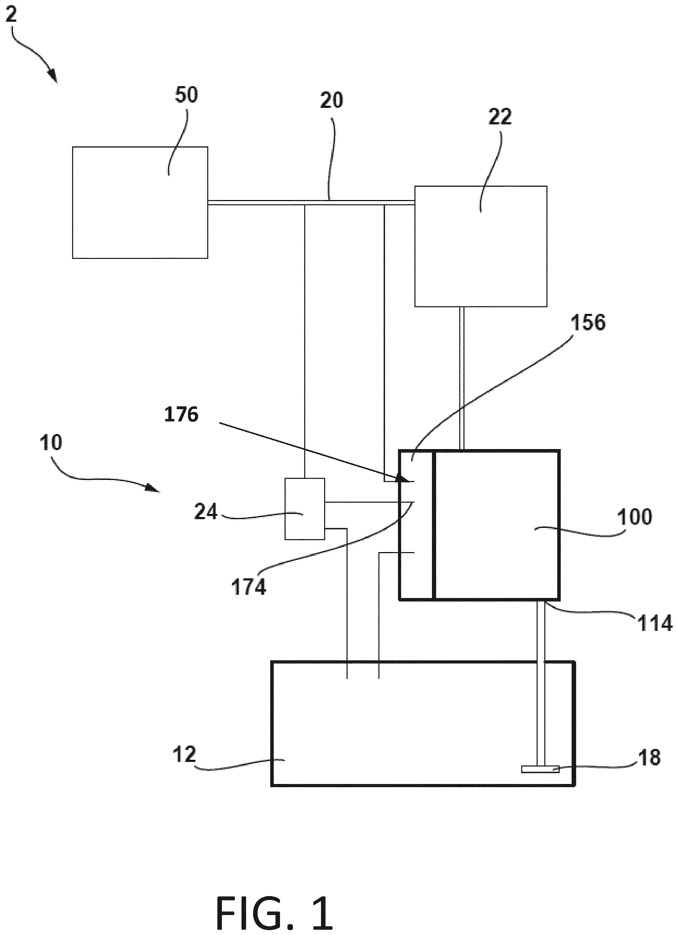

FIGS. 1-5 show example configurations with relative positioning of the various components. If shown directly contacting each other, or directly coupled, then such elements may be referred to as directly contacting or directly coupled, respectively, at least in one example. Similarly, elements shown contiguous or adjacent to one another may be contiguous or adjacent to each other, respectively, at least in one example. As an example, components laying in face-sharing contact with each other may be referred to as in face-sharing contact. As another example, elements positioned apart from each other with only a space there-between and no other components may be referred to as such, in at least one example. As yet another example, elements shown above/below one another, at opposite sides to one another, or to the left/right of one another may be referred to as such, relative to one another. Further, as shown in the figures, a topmost element or point of element may be referred to as a "top" of the component and a bottommost element or point of the element may be referred to as a "bottom" of the component, in at least one example. As used herein, top/bottom, upper/lower, above/below, may be relative to a vertical axis of the figures and used to describe positioning of elements of the figures relative to one another. As such, elements shown above other elements are positioned vertically above the other elements, in one example. As yet another example, shapes of the elements depicted within the figures may be referred to as having those shapes (e.g., such as being circular, straight, planar, curved, rounded, chamfered, angled, or the like). Further, elements shown intersecting one another may be referred to as intersecting elements or intersecting one another, in at least one example. Further still, an element shown within another element or shown outside of another element may be referred as such, in one example.

With reference to FIG. 1, an embodiment of an engine 2 comprises a lubricating oil system 10 and one or more pressure lubricated components 50 requiring a feed of lubricating oil. The oil system 10 comprises an oil sump 12 configured to store oil when the oil is not being circulated around the engine. The oil system 10 also includes an oil pump 100 configured to pump the oil from the oil sump 12 to the pressure lubricated components 50. The oil pump 100 may be driven by the engine using a gear, belt or other form of mechanical drive.

An oil pick-up 18 is arranged within the oil sump 12 and configured to allow the oil to be drawn into an inlet of the oil pump. In some arrangements, the oil pick-up 18 may comprise a mesh, generally a relatively course mesh, configured to prevent debris within the oil sump being drawn into the pump 100.

The oil pump 100 may be a variable displacement pump. The oil pump 100 may comprise a displacement control mechanism configured to adjust the displacement of the pump according to an outlet pressure of the pump in order to regulate the outlet pressure.

A bulk flow of oil pumped by the pump 100 leaves the pump via an outlet. The oil leaving the pump may be delivered to a main oil gallery 20 of the engine 2. The main oil gallery 20 supplies oil to each of the pressure lubricated components 50 of the engine.

In an embodiment featuring a variable displacement pump, a third inlet 176, described further in reference to Figure 2b, may be in fluid communication with the main oil gallery 20. Hence the third inlet 176 may receive oil at a pressure substantially equal to the outlet pressure of the oil pump 100. A second inlet 174 may be in fluid communication with a pressure control valve 24. The pressure control valve 24 may provide pressurized oil to the second inlet 176 when it is desirable to reduce the pressure of oil being supplied by the oil pump, as described below.

The mesh provided at the oil pick-up 18 may have a large mesh size and is intended to prevent large pieces of debris from being drawn into the pump. Before the oil is circulated around the engine, it is desirable for the oil to be filtered to remove smaller solid contaminants. These contaminants might otherwise build up within and damage the pressure lubricated components 50 of the engine 2.

The oil system 10 may comprise a pressure control valve. The pressure control valve receives a supply of oil from the oil gallery 20. The pressure control valve 24 is operable to provide pressurized oil to the second inlet 174. Oil provided to the second inlet 174 may enter a second regulation pressure chamber 156. Providing pressurized oil to the second inlet therefore may have the effect of increasing the outlet pressure of the pump. Providing pressurized oil to the inlet therefore leads to a reduction in the outlet pressure to which the pump is regulated.

When the engine is operating at a high speed or under a high load, it is desirable for the oil pump 100 to provide oil at a high pressure. Conversely, when the engine is operating at a low speed or load, it is desirable to reduce the pressure of oil supplied by the pump 100. A reduction in pressure may improve the fuel economy of the engine.

The oil system 10 may further comprise an oil filter 22. The oil leaving the outlet of the pump may be passed through the oil filter 22 before reaching the main oil gallery 20. Oil filter 22 removes potentially damaging or wear inducing solid contaminants present within the oil leaving the oil pump 100.

As described above, the oil pick-up 18 is provided with a coarse mesh configured to prevent large pieces of debris from entering the oil pump 100. The oil filter 22 is provided to remove smaller pieces of debris and solid contaminants from the oil that passed through the pick-up mesh.

In some oil systems, oil passing through a port such as oil port 114 into the first pressure regulation chamber may not have been passed through the oil filter 22 since leaving the oil sump 12. Any solid contaminants present within the oil passing through the port 114 may settle into pumping or valve components which may be degraded or rendered inoperable by a buildup of contaminants. Therefore, filtering oil before it enters these components is desirable.

With reference to FIGS. 2a and 2b, an oil pump 100 according to arrangements of the present disclosure comprises a housing 101 defining an inlet chamber 102 and an outlet chamber 104, and a pump portion 120. Oil entering the pump via the inlet 100a is received within the inlet chamber 102. The oil within the inlet chamber 102 is drawn into the pump portion 120 and the pressure of the oil is increased before the oil is delivered into the outlet chamber. The outlet 100b of the oil pump 100 is provided in the outlet chamber 104.

Figure 2A depicts an embodiment of a variable displacement oil pump with a rotor. The pump portion 120 may comprise a rotor rotatable within a compression volume. The pump 100 may also comprise a plurality of stators (not shown) arranged within the compression volume. The rotor and stators are configured such that rotation of the rotor within the compression volume increases the pressure of the oil within the compression volume and pumps the oil into the outlet chamber 104 of the pump 100. Rotation of the rotor is driven by the engine of the motor vehicle or via a mechanical drive system, such as a gear drive or belt drive.

The pump portion 120 may also comprise a setting ring 126. The setting ring 126 is movable in order to adjust a compression volume and thereby adjust the capacity of the pump. When the pump is operating at a constant power, adjusting the capacity of the pump adjusts the outlet pressure of oil supplied by the pump. Similarly, when the power supplied to drive the pump varies, the capacity of the pump may be adjusted in order to maintain the outlet pressure of oil supplied by the pump.

Figure 2a depicts an embodiment wherein the pump 100 may also comprise a first pressure chamber 106 and a second pressure chamber 108. The first and second pressure chambers 106 and 108 are defined by the pump housing 101. The setting ring 126 comprises a first pressure face 126a and a second pressure face 126b. As depicted in Figure 2a, the pump 100 is configured such that the first pressure face 126a is exposed to oil within the first pressure chamber 106 and the second pressure face 106b is exposed to oil within the second pressure chamber 108. The position of the setting ring and the operation of the pump 100 is therefore be determined by a difference in pressure between the first pressure chamber 106 and second pressure chamber 108. The pump 100 may further comprise a biasing element configured to bias the position of the setting ring. In the arrangement depicted, the position of the setting ring is biased towards the first pressure chamber 106.

The first presume chamber 106 and second pressure chamber 108 may be in fluid communication with the outlet chamber 104. Hence the pressure chambers 106 and 108 may supplied with oil at a pressure substantially equal to the outlet pressure of the pump.

Figure 2a depicts and embodiment wherein the first pressure chamber 106 does not comprise an outlet, therefore the pressure of oil within the first pressure chamber 106 may be substantially equal to the outlet pressure of the oil pump 100.

In contrast to first pressure chamber 106, the second pressure chamber 108 comprises an oil port 114. The oil port 114 allows oil to flow from the second pressure chamber 108 to the displacement control mechanism 150. As described below, the displacement control mechanism controls the rate at which oil flows through the oil port 114. As the rate of flow of oil through the oil port 114 increases, the pressure of oil within the second pressure chamber 108 is reduced. The operation of the displacement control mechanism 150 can thereby control the pressure of the second pressure chamber 108.

If the pressure of oil within the second pressure chamber is reduced, the pressure force acting on the setting ring 126 at the second pressure face 126b may also reduce. In particular, the force acting on the setting ring 126 at the second pressure face 126b is reduced compared to the force acting on setting ring 126 at the first pressure face 126a. A net force is therefore placed on the setting ring 126, which moves the setting ring 126 within the pump portion 120, adjusting the operation of the pump 100.

With reference to Figure 2b, an embodiment of the oil system may comprise a spool valve, having a spool cavity 152 and a spool 160 movable within the spool cavity 152.

The spool cavity 152 may comprise a substantially cylindrical cavity formed within the spool valve 150. The diameter of the spool cavity 152 may be constant. Alternatively, as depicted in Figure 2b, the diameter of the spool cavity may vary. For example, a first length 152a of the spool cavity may be a first diameter and a second length 152b of the spool cavity may be a second diameter that is different to the first diameter.

One embodiment of spool 160 comprises a rod 162 and a plurality of pistons 164, 166, 168. The pistons 164 are spaced along the length of the rod 162. The pistons 164, 166, 168 may be substantially cylindrical. The shape of the pistons is configured such that a seal is formed between outer surfaces 164a, 166a, 168a of the pistons and an inner surface 152c of the spool cavity. In particular, the pistons are configured to limit the leakage of oil past the pistons 164, 166, 168 of the spool 160. For example, the diameter of the pistons may substantially correspond to the diameter of the spool cavity 152 at the location of the piston. In some arrangements, the pistons may comprise one or more seals provided at the outer surfaces 164a of the pistons in order to improve the seal between the pistons and the spool cavity 152.

In such an embodiment, each pair of adjacent pistons defines a pressure regulation chamber, such as the first pressure regulation chamber 154, second pressure regulation chamber 156 and third pressure regulation chamber 158, which may be respective portions of the spool cavity provided between the pistons. Additionally, pressure regulation chambers, such as the third pressure regulation chamber 158 may be defined between one of the pistons and an end 152d of the spool cavity. As the pistons are configured to limit the leakage of oil past the pistons, each regulation chamber is substantially isolated from the other pressure regulation chambers.

The pistons 164, 166, 168 of an embodiment, each define pressure faces 164b, 166b, 168b against which pressurized oil within the pressure regulation chambers 154, 156, 158 may act. The diameter of one or more of the pistons may differ from the diameter of one or more of the other pistons. For example, as depicted in Figure 2b, first and second pistons 164, 166 have a first diameter, and third piston 168 has a second diameter that is different than the first and second pistons.

For pressure regulation chambers that are defined by a pair of adjacent pistons that are the same diameter, such as the first pressure regulation chamber 154, the forces acting on the spool 160 due to the pressure of oil within the pressure regulation chamber acting on the pressure faces of the pistons is balanced, e.g. there is no net force acting on the spool 160. However, for pressure regulation chambers, such as the second pressure regulation chamber 156, that are defined by pistons having different diameters, the force acting on the piston with a larger diameter is greater than the force acting on the piston with a smaller diameter. Similarly, for pressure regulation chambers that are defined by a single piston and an end of the spool cavity, such as the third pressure regulation chamber 158, the force acting on the spool 160 due to the pressurized oil within the chamber equals the pressure force acting on the single piston defining the pressure regulation chamber.

By providing pressurized oil within the pressure regulation chambers such as the second and third pressure regulation chambers 156 and 158, a net pressure force may be applied to the spool 160. The spool valve 150 further comprises a biasing element 170, such as a resilient member configured to oppose the pressure balance force applied to the spool such as during steady state operation of the pump 100.

A biasing element 170 may be configured such that an opposing force provided by the biasing element is proportional to a displacement of the spool 160. For example, a neutral position of the spool in which the biasing element does not provided any balancing force. Hence, the position of the spool 160 within the spool cavity 152, will be dependent on the net pressure force applied to the spool. In other words, the position of the spool 160 may depend on the pressure of oil provided within the second and third pressure regulating chambers 156 and 158.

The spool valve may comprise first, second and third inlets 172, 174, 176, in fluid communication with the first, second and third pressure regulation chambers 154, 156, 158 respectively. In the arrangement shown in Figure 2b, the first inlet 172 receives pressurized oil from the second pressure chamber 108 of the pump 100 via the oil port 114.

With reference to the embodiment depicted in Figure 2b, the spool valve 150 further comprises a pressure regulation port 153. The pressure regulation port may be configured to permit oil to leak out of the spool cavity 152 and return to the oil sump 12 of the engine. As depicted in Figure 2b, when the pump is operating in a particular operating condition, the pressure regulation port 153 is blocked by a spool piston. However, if the position of the spool varies, the pressure regulation port is no longer blocked by the piston. A pressure regulation outlet 153a is defined by the portion of the pressure regulation outlet 153 that is not blocked by the piston.

The size of the pressure regulation outlet 153 may affect the rate at which oil is able to flow through the spool valve through the first inlet 172. As described above with reference to Figure 2a, the rate at which oil is able to flow out of the second pressure chamber 108 affects the pressure of oil within the second pressure chamber, thereby affecting the operation of the pump 100. In this way, the spool valve 150 is configured to control the pressure of oil supplied by the pump 100.

The engine speed may be correlated to the oil pump operation. In one example, increasing engine speed increases the pressure of oil within the outlet chamber 104, the first pressure chamber 106 and the second pressure chamber 108. The outlet pressure of oil from the pump 100 is thereby increased, and hence, the pressure of oil in the main oil gallery 20 is increased accordingly.

As described above, an embodiment of the third inlet 176 of the spool valve receives oil from the oil gallery 20, and hence, if the pressure of oil within the third pressure regulation chamber 158 increases, then the pressure force applied to the third piston 168 increases. If the pressure of oil within the first pressure regulation chamber has increased, it may not affect the net pressure force applied to the spool 160 because the diameters of the first piston 164 and second pistons 166 may be the same,

An increased pressure of the third pressure regulation chamber 158 may cause the spool 160 to be displaced such that the size of the pressure regulation outlet 153a is increased. This leads to an increased rate of flow of oil from the second pressure chamber 108 into the oil port 114. The oil flows from port 114 into the first pressure regulation chamber 154 and further through the pressure regulation port 153. The increased flow of oil reduces the pressure within the second pressure chamber 108.

With reference to the embodiment shown in Figure 2a, reducing the pressure within the second pressure chamber 108 changes the balance of pressure forces acting on the setting ring 120 of the pump 100. The setting ring 120 is moved within the pump due to the change in pressure balance. The capacity of the pump is thereby affected by the change in position of the setting ring 120, which affects the outlet pressure of the pump. In this way, the outlet pressure of the pump 100 is regulated.

Reliably regulating the outlet pressure of oil supplied by the pump 100 is important to ensure that the pressure lubricated components 50 of the engine continue to operate effectively.

As shown in the embodiment depicted in Figure 1, the oil system 10 may comprise a pressure control valve 24. The pressure control valve receives a supply of oil from the oil gallery 20. The pressure control valve 24 is operable to provide pressurized oil to the second inlet 174 of the spool valve 150. Oil provided to the second inlet 174 enters the second regulation pressure chamber 156 of the spool valve. As shown in Figure 2b, the diameters of the pistons defining the second regulation chamber may differ. In particular, the diameter of the second piston 166 may be greater than the diameter third piston 168. Hence, pressurized oil provided to the second inlet may induce a net force applied to the spool 160. In an embodiment, the net force applied to the spool is in the same direction as the force applied to the spool by the oil within the third pressure regulation chamber 158. Providing pressurized oil to the second inlet therefore has the same effect as an increase in the outlet pressure of the pump. Providing pressurized oil to the inlet therefore leads to a change in the outlet pressure by which the pump is regulated.

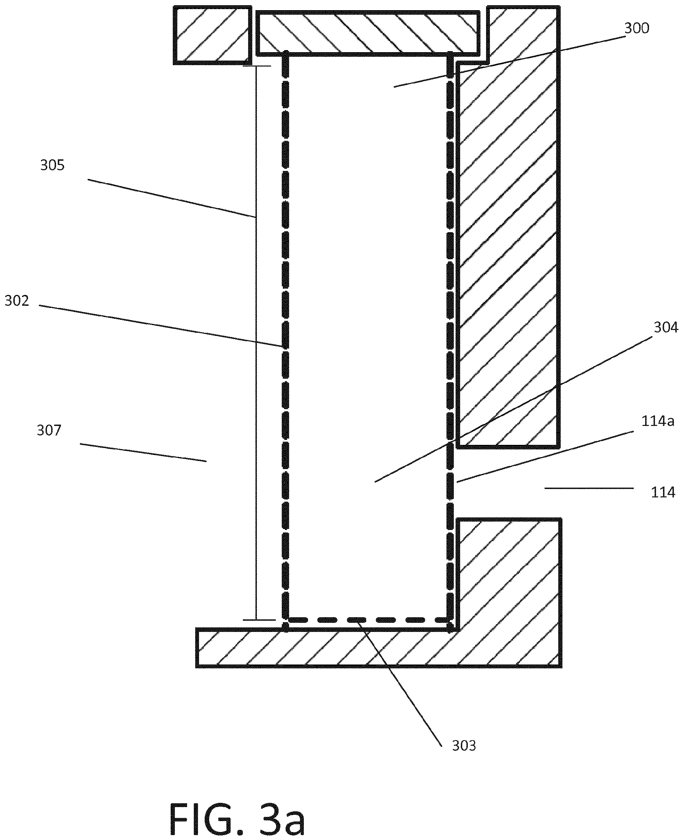

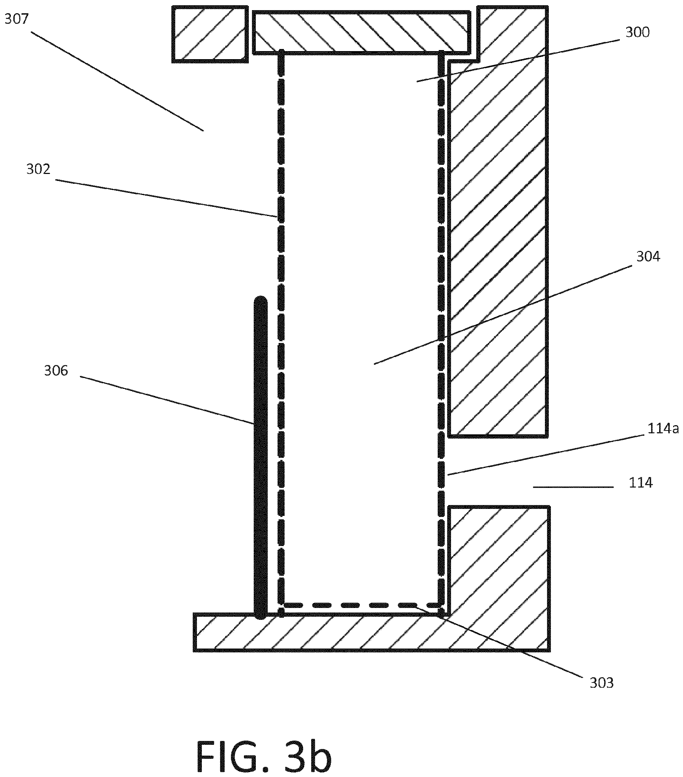

As depicted in FIGS. 2a and 2b, the oil pump 100 also comprises an internal filter 300. The filter is configured such that oil passing through the oil port 114 passes through a filter element 302, show in FIG. 3, which may comprise a mesh. The mesh 302 is sufficiently fine that potentially harmful solid contaminants are separated from the oil passing through the filter. The filter element 302 may be spaced apart from an opening 114a of the oil port 114. Additionally, an area of the filter element 302 through which the oil passes before passing through the oil port 114 may be greater than an area of the oil port opening 114a.

In the arrangements shown in FIGS. 2a and 2b, the filter 300 is provided within a second pressure chamber and configured to filter oil within the chamber. However, it is equally envisaged that the filter 300 may be provided outside the second pressure chamber and configured to filter oil passing into the second pressure chamber. The oil filter may also be provided to filter oil prior to reaching the pump.

The oil pump may be a variable displacement oil pump. The mechanism for adjusting the displacement of the pump may comprise a pressure regulation outlet downstream of the oil port. A flow area defined by the pressure regulation outlet may be varied by the mechanism for adjusting displacement of the pump according to an operating condition such as an outlet pressure of the oil pump. Adjusting the displacement of the pump may be used to regulate the pressure of oil supplied by the oil pump.

The oil pump may include a spool valve configured to vary the rate at which oil passes through the oil port according to an outlet pressure of the oil pump. In other words, the mechanism for adjusting the displacement of the pump may comprise the spool valve.

The spool valve may comprise a pressure regulation chamber and a spool, movable within the pressure regulation chamber. Oil passing though the oil port may flow into the pressure regulation chamber. The spool valve may further comprise a pressure regulation outlet configured to allow oil to flow out of the pressure regulation chamber. The position of the spool within the pressure chamber may be varied according to an outlet pressure of the oil pump, in order to vary a flow area of the pressure regulation outlet.

The spool valve may be configured such that the outlet pressure of the oil pump affects the position of the spool valve within the pressure regulation chamber. For example, the outlet of the oil pump may be in fluid communication with a pressure face of the spool. The spool may be biased by a resilient element

The flow area of the pressure regulation outlet may affect the pressure of the oil within the pressure chamber of the oil pump and thereby affect the outlet pressure of the oil pump. In other words, the spool valve and the pressure chamber of the oil pump may regulate the outlet pressure of the oil pump.

The spool valve may further comprise a low pressure set input. The spool valve may be configured to receive oil via the low pressure set input in order to adjust the position of the spool within the pressure regulation chamber and thereby to adjust the outlet pressure of the oil pump. Providing oil to the low pressure set input may adjust a balance of forces acting on the spool, which may affect the regulated outlet pressure of the oil pump.

With reference to FIGS. 3a and 3b, oil with contaminants will initially flow through the filter element 302. The flow of oil may be greatest through an area of the filter element 302 adjacent to the oil port 114. The portion of the filter element that contacts the oil containing contaminants is the filter surface area 305. Contaminants from the oil may begin to build up on the filter element 302 after a period of operation. Contaminates may build up quickest in an area adjacent to the oil port 114. By providing the filter element 302 having a greater filter surface area 305 compared to the oil port opening 114a, the likelihood of the filter element 302 oil flow becoming blocked is significantly reduced.

As depicted in FIG. 3b, if a portion of the filter element adjacent to the port 114 includes a particulate blockage 306, oil can continue to flow through a portion of the filter element further from the oil port. By spacing the filter surface area apart from the oil port 114, an oil flow channel 304 is maintained on the filtered side of the filter element 302. Oil that has passed though the filter element 302 can therefore flow through the clean oil channel 304 to reach the oil port.

As shown in FIGS. 2a, 2b, 3a, 3b, the oil filter 300 is prismatic in shape. The oil filter may be shaped as a triangular, square prism, or any other regular or irregular prism. The filter element 302 forms outer surface of the prism. In some arrangements, the filter 300 may primarily consist of the filter element 302.

The oil filter 300 may be arranged within the oil pump 100 such that the central axis of the oil filter 300 is disposed at an angle relative to a flow path defined by the oil port 114. For example, the oil filter 300 may be arranged such that the central axis of the filter is approximately perpendicular relative to the flow path of the oil port 114. This orientation may provide the space between the filter surface area 305 and oil port 114. This flow space 304 allows oil to flow after passing through the filter surface area prior to entering the port 114. The filter surface area 305 may be supported by the pump housing away from the opening of the oil port. The filter may fit into a cavity 307 within the housing. In some arrangements, the filter may be supported by an internal wall. In other arrangements, a sidewall portion of the filter may provide the distance between the pump surface area and the port. This distance may be defined by the length of the side wall portion. This side wall portion is depicted in FIG. 3 as 303.

The filter element may comprise a mesh and may be metallic. The filter element may also comprise felt, paper or any other material capable of filtering oil. The material may provide resiliency. This resiliency may provide the side wall stiffness to support the filter surface area a distance away from the port. In a filter composed entirely of metallic mesh, this resiliency may be a property of the filter material. If the filter is composed of a less reliant material, the side wall may be composed of a different material than the filter portion.

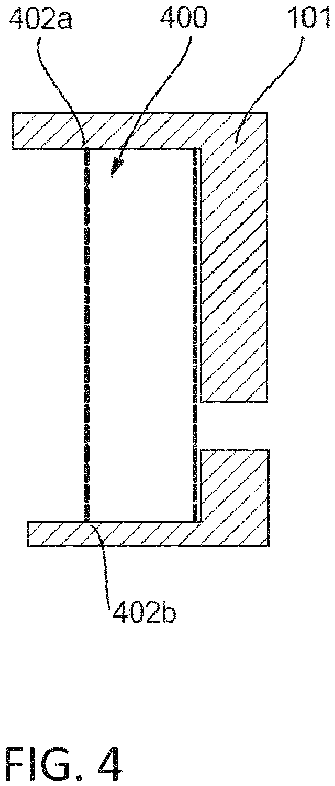

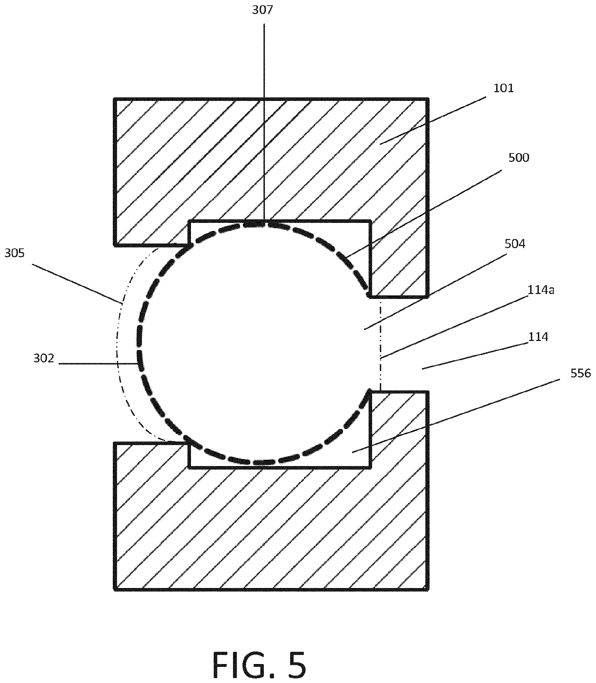

With reference to FIG. 4 and 5, oil filters 400, 500 according to arrangements of the present disclosure will now be described. The oil filter 400 or 500 may be supported by the housing 101 of the oil pump. The oil filter 400 or 500 may be supported by the housing at a location on the housing away from the oil port opening 114a. As shown in FIG. 4, the filter may comprise a substantially planar filter element. The filter element may be supported by the housing at ends 402a, 402b of the filter element.

With reference to FIG. 5, the oil filter 500 may be substantially prismatic in shape and may include a longitudinal slot 504. The slot 504 may be defined in the outer surface of the prism. When the filter is installed into the pump 100 the longitudinal slot may be aligned with the oil port 114. Alternatively, the filter may be arranged such that edges of the longitudinal slot contact the wall of the housing 101. In some embodiments oil does not flow though the slot prior to passing through the filter element 502. For example, oil may pass though the filter element of the filter prior to passing through the longitudinal slot. The filter may be arranged within the oil pump such that the longitudinal slot of the filter is substantially aligned with the oil port. For example, the filter may be arranged, such that the edges of the longitudinal slot contact a wall of the housing.

The filter 500 may be compressible by reducing the width of the slot. Compression of the slot will reduce the cross-sectional area of the filter in a plane perpendicular to the central/longitudinal axis of the filter. For example, the filter 500 may be compressed during assembly, in order to fit the filter into the oil pump.

The filter 500 may be resilient. Once the filter has been installed within the pump 100, the filter 500 may expanded by virtue of its own resilience. This expansion may be due to an increasing of the width of the slot 504. The filter 500 may expand such that a part of the outer surface of the filter engages walls of the housing 101, such that the filter 500 is supported by the housing. The filter may be compressed prior to installation into the pump and may expand during installation in order to engage the walls of the pump.

As depicted in FIG. 5, the housing 101 may define a filter chamber portion 550 configured to receive the filter. The filter chamber portion may be formed within the second chamber 104 of the oil pump 100 depicted in FIGS 2a and 2b. The filter 500 may engage two or more walls of a filter chamber, such that the filter is supported by the housing 101 within the filter chamber.

The filter chamber may define a shoulder configured to abut the filter 500 in order to retain the filter within the filter chamber. The shoulder may be a square, chamfered or rounded shoulder. The shape of the shoulder may correspond to the shape of the filter at the position at which the shoulder abuts the filter. The shoulder may at least partially define a neck portion of the filter chamber portion. The neck portion may have a reduced width or area compared to a cavity 556 portion of the filter chamber in which the filter is supported.

The filter 500 may be arranged such that a central/longitudinal axis of the prismatic shape of the filter is at an angle relative to a flow path defined by the oil port. For example, the oil filter may be arranged such that the central axis of the oil filter is at substantially perpendicular to the flow path defined by the oil port.

The oil port may be configured to deliver oil to the mechanism for adjusting the displacement of the pump of the oil pump, in order to regulate the pressure of oil supplied by the pump.

The oil pump may comprise a pressure chamber. Displacement of the pump may vary according to a pressure of oil within the pressure chamber. The oil pump may comprise a further filter chamber. The displacement of the pump may vary according to a difference in pressure between the pressure chamber and the further pressure chamber.

The filter may be configured to filter oil within the pressure chamber. The filter may be configured to filter the oil passing into the pressure chamber. The filter may be provided within the pressure chamber. An oil port may be defined within the pressure chamber. The oil port may be configured to allow oil to flow out of the pressure chamber in order to affect the pressure of oil within the pressure chamber. The filter may be configured to filter the oil leaving the pressure chamber. The filter chamber portion may be defined within the pressure chamber.

The filter 300, 400, 500 may be a press fit glued, threaded, clipped or otherwise fixed in position relative to the oil port.

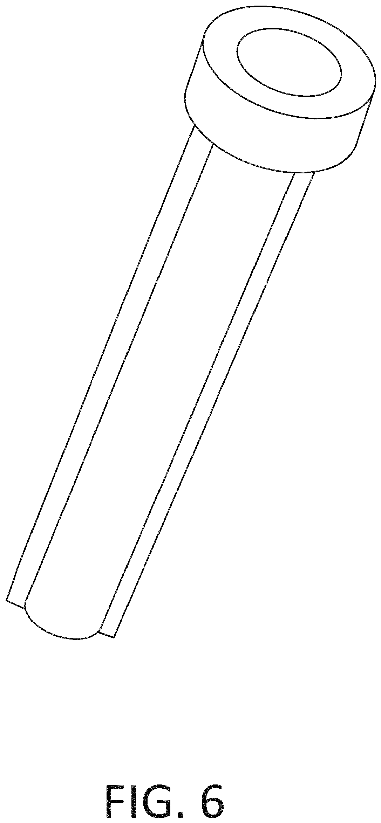

FIG. 6 depicts an embodiment of an oil filter, not according to the invention. The outer surface of the cylinder may be composed of a metal mesh. If this embodiment is positioned such that the longitudinal axis of the filter is oriented perpendicular to a port, then the filter surface area will likely be greater than the port area. Furthermore, the oil will be able to pass through the filter surface area into the interior of the filter before entering the port. Therefore, even if part of the filter surface area is clogged, the oil has a path to flow to the port.

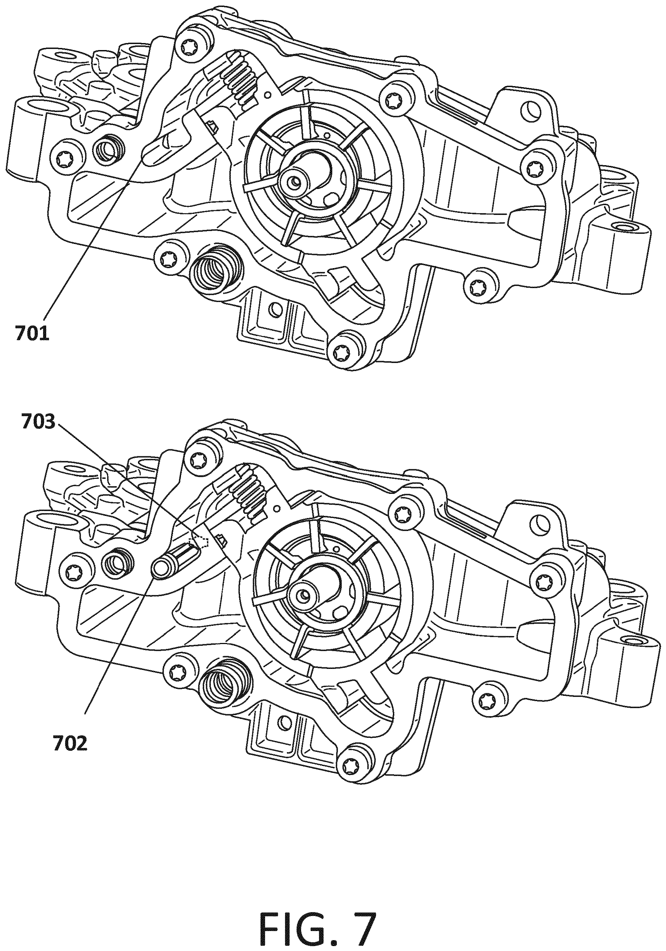

FIG. 7 depicts an embodiment of the use of a filter in a variable displacement pump. This embodiment provides advantages of minimal changes to the manufacturing of the pump internal casting. Furthermore, cross drilling through the housing walls is not required.

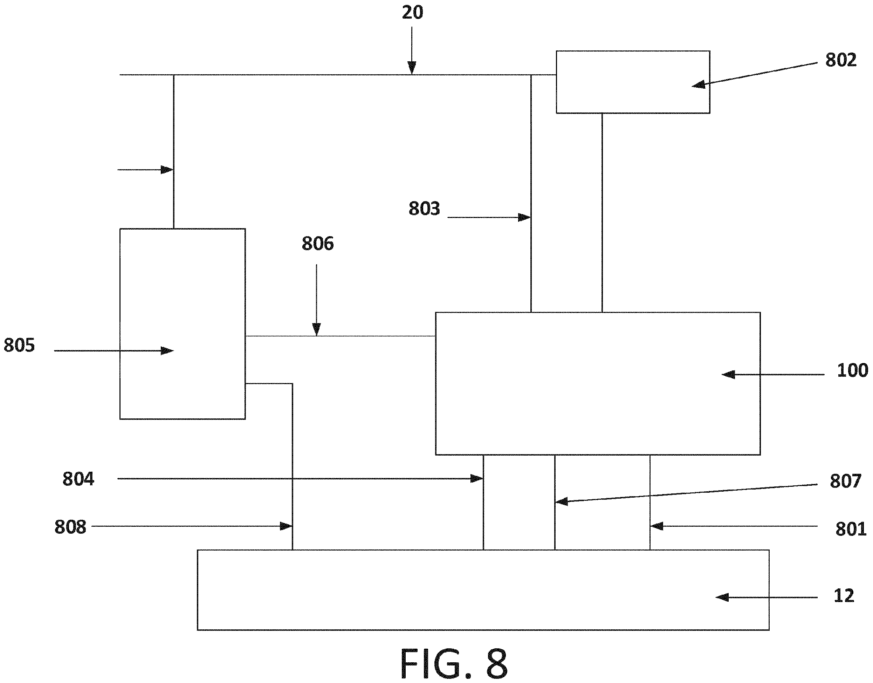

FIG. 8 depicts an example oil circuit diagram of an oil system 10. The oil pump 100 receives oil from the sump 12 via the oil pick up 801. The oil pump 100 sends oil to the oil filter cooler assembly 802. The oil then flows to the main oil gallery 20. The pump 100 receives a constant feedback signal 803 from the main oil gallery 20. This feedback signal 803 may enter a spool valve chamber of oil pump 100. Regulated oil is discharged into the oil sump out of the regulation output port 804. A switch 805 receives oil from the oil gallery 20 and operates to switch between a high pressure set point and a low pressure set point. This switch may be a solenoid. The switch 805 operates by switching on the low set point signal 806 to the pump which may enter the spool valve. A pump may be equipped with an over-pressure discharge port 807 in case there is a blockage in the oil filter or engine. Similarly, the switch 805 may have a pressure relief port 808.

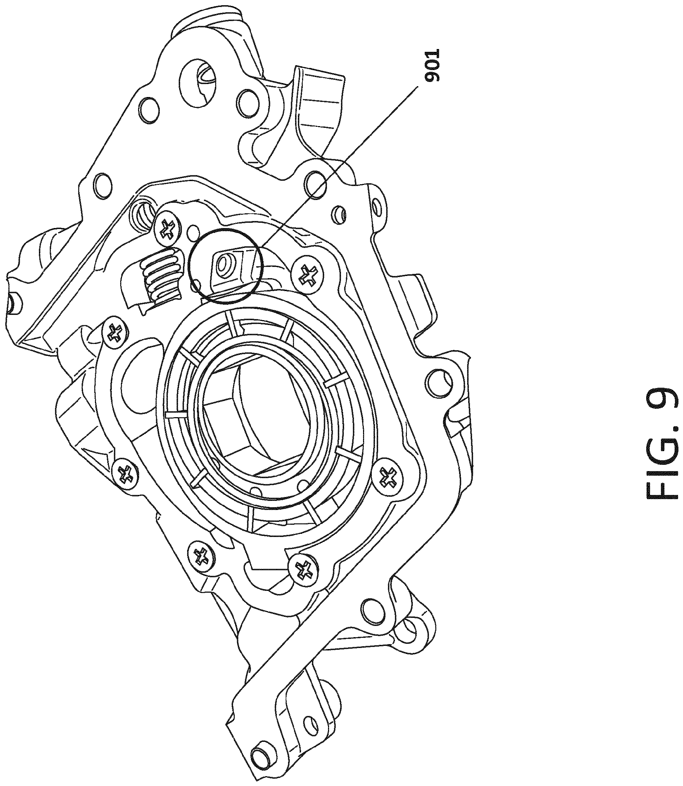

FIG. 9 depicts an example of a conventional button filter 901 mounted in an oil pump. The button filter 901 is positioned inside of an oil port. Clogging particulates may build up on the button filter and block the flow of the entire oil port. Clogging of an entire oil passage may lead to catastrophic failure of engine components.

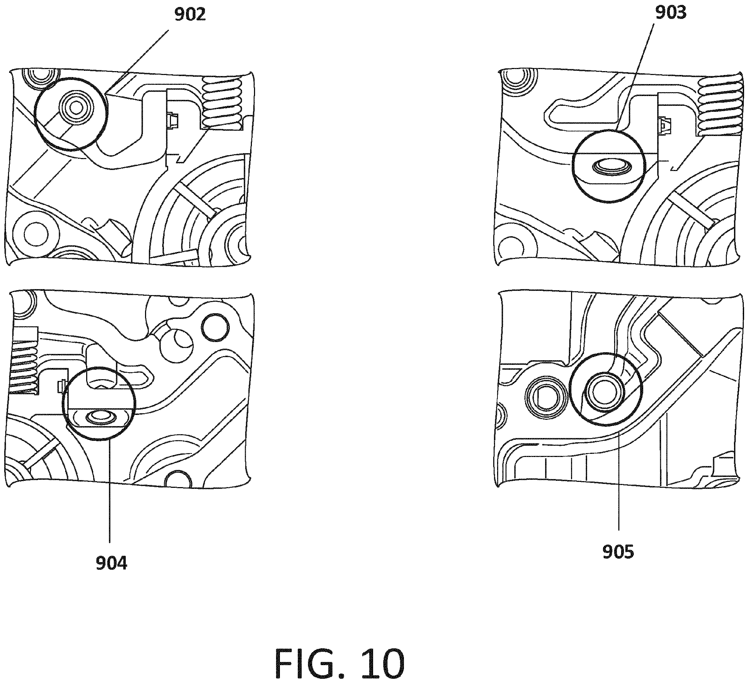

FIG. 10 depicts other examples of mounting conventional filters in oil pumps. Filter 902 is fitted into a vertical drilling which is fed via a horizontal hole. Filter 902 is prone to filter clogging over time because oil only flows through the filter and not past it. Therefore, contamination will build up on the filter media until the filter is completely clogged. Filter 903 is located in a housing wall, however the filter 903 may be angled. Filters must commonly be angled if the housing wall is too thin to house the filter or if there isn't space for drill access. This design may allow oil to flow both past and through but may be expensive due to the angled drilling. Filter 904 is similar in principle to filter 903 but the filter 904 is located in the pump cover rather than the housing. Filter 904 may also be expensive to manufacture as it may require special casting and machining. Filter 905 fitted close to the spool valve chamber inlet hole, but this is easily clogged as oil only flows through it similarly to filter 902.

In the preferred embodiments, the oil filter may maintain oil flow in the presence of clogging particulates. The large filter surface area will allows oil to flow in alternative path around clogging particulates. This may allow the filters to operate with a high level of clogging particulates than conventional filters. The alternative flow path is operable due to a large filter surface area and the filter surface area being located a distance from an oil port. This configuration allows the oil to flow through unclogged portions of the filter surface area and into the interior of the filter before passing into the port.

It will be appreciated that the configurations and routines disclosed herein are exemplary in nature, and that these specific embodiments are not to be considered in a limiting sense, because numerous variations are possible. For example, the above technology can be applied to V-6, I-4, 1-6, V-12, opposed 4, and other engine types. The subject matter of the present disclosure includes all novel and non-obvious combinations and sub-combinations of the various systems and configurations, and other features, functions, and/or properties disclosed herein, within the scope of the appended claims.

## Claims

1. A variable displacement oil pump (100) for a motor vehicle, the oil pump comprising:
a mechanism (150) for adjusting the displacement of the pump, the mechanism comprising an oil port (114) formed in an internal wall of the pump; and
a filter (300) wherein a filtering surface (302) of the filter is spaced apart from an opening (114a) of the oil port and
wherein the area (305) of the filtering surface is larger than an area of the opening, wherein the filter is substantially prism shaped, and wherein the filtering surface of the filter forms an outer surface of the prism.

2. The oil pump of claim 1, wherein the filter is supported by a housing (101) of the oil pump at a location away from the opening of the oil port.

3. The oil pump of claim 1, wherein the filter comprises a longitudinal slot provided within an outer surface of the prism, and wherein the filter is compressible by reducing a width of the slot

4. The oil pump of claim 3, wherein the filter is arranged within the oil pump such that the longitudinal slot of the filter is substantially aligned with the oil port.

5. The oil pump of any of the preceding claims, wherein the filter is arranged such that a longitudinal axis of the filter is at an angle relative to a flow path defined by the oil port.

6. The oil pump of any of the preceding claims, wherein the filter is resilient and is configured to expand by virtue of its resilience in order to engage one or more walls of the pump, such that the filter is supported within the pump.

7. The oil pump of any of the preceding claims, wherein a housing of the pump defines a filter chamber portion (550) configured to receive the filter.

8. The oil pump of claim 7, wherein the filter chamber portion defines a shoulder configured to abut the filter in order to retain the filter within the filter chamber portion.

9. The oil pump of any of the preceding claims, wherein the oil pump comprises a pressure chamber (108), wherein the displacement of the pump varies according to a pressure of oil within the pressure chamber; wherein the filter is configured to filter oil within the pressure chamber.

10. The oil pump of claim 9, wherein the oil port is defined within the pressure chamber and is configured to allow oil to flow out of the pressure chamber in order to affect the pressure of oil within the pressure chamber.

11. The oil pump of claim 9 or 10, wherein the filter is provided within the pressure chamber.

12. A motor vehicle comprising:
an oil sump (12);
the variable displacement oil pump (100) according to any of the preceding claims, wherein the oil pump is configured to draw oil from the oil sump into an inlet of the oil pump and pump the oil out of an outlet of the oil pump; and
an oil gallery (20) configured to receive pressurized oil from the outlet of the oil pump.

13. The motor vehicle of claim 12, wherein the lubrication system further comprises an oil filter (802) operatively disposed between the outlet of the oil pump and the oil gallery, wherein the oil filter is configured to filter solid contaminants from the oil leaving the pump outlet.

## Patentansprüche

1. Verstellölpumpe (100) für ein Kraftfahrzeug, die Ölpumpe umfassend:
einen Mechanismus (150) zum Einstellen der Verdrängung der Pumpe, der Mechanismus umfassend einen Ölanschluss (114), der in einer Innenwand der Pumpe gebildet ist; und
einen Filter (300), wobei eine Filteroberfläche (302) des Filters von einer Öffnung (114a) des Ölanschlusses beabstandet ist und wobei die Fläche (305) der Filteroberfläche größer ist als eine Fläche der Öffnung, wobei der Filter im Wesentlichen prismenförmig ist und wobei die Filteroberfläche des Filters eine Außenfläche des Prismas bildet.

2. Ölpumpe gemäß Anspruch 1, wobei der Filter von einem Gehäuse (101) der Ölpumpe an einer von der Öffnung des Ölanschlusses entfernten Stelle getragen wird.

3. Ölpumpe gemäß Anspruch 1, wobei der Filter einen Längsschlitz umfasst, der innerhalb einer Außenfläche des Prismas bereitgestellt ist, und wobei der Filter durch Verringern der Breite des Schlitzes komprimierbar ist.

4. Ölpumpe gemäß Anspruch 3, wobei der Filter innerhalb der Ölpumpe angeordnet ist, sodass der Längsschlitz des Filters im Wesentlichen mit dem Ölanschluss ausgerichtet ist.

5. Ölpumpe gemäß einem der vorherigen Ansprüche, wobei der Filter angeordnet ist, sodass eine Längsachse des Filters in einem Winkel in Bezug auf einen durch den Ölanschluss definierten Strömungsweg ist.

6. Ölpumpe gemäß einem der vorherigen Ansprüche, wobei der Filter elastisch ist und konfiguriert ist, um sich aufgrund seiner Elastizität auszudehnen, um eine oder mehrere Wände der Pumpe einzugreifen, sodass der Filter innerhalb der Pumpe getragen wird.

7. Ölpumpe gemäß einem der vorherigen Ansprüche, wobei ein Gehäuse der Pumpe einen Filterkammerabschnitt (500) definiert, der zum Aufnehmen des Filters konfiguriert ist.

8. Ölpumpe gemäß Anspruch 7, wobei der Filterkammerabschnitt eine Schulter definiert, die konfiguriert ist, um an den Filter anzustoßen, um den Filter innerhalb des Filterkammerabschnitts zu halten.

9. Ölpumpe gemäß einem der vorherigen Ansprüche, wobei die Ölpumpe eine Druckkammer (108) umfasst, wobei die Verdrängung der Pumpe gemäß einem Öldruck innerhalb der Druckkammer variiert; wobei der Filter konfiguriert ist, um Öl innerhalb der Druckkammer zu filtern.

10. Ölpumpe gemäß Anspruch 9, wobei der Ölanschluss innerhalb der Druckkammer definiert ist und konfiguriert ist, um zu ermöglichen, dass Öl aus der Druckkammer herausströmt, um den Öldruck innerhalb der Druckkammer zu beeinflussen.

11. Ölpumpe gemäß Anspruch 9 oder 10, wobei der Filter in der Druckkammer bereitgestellt ist.

12. Kraftfahrzeug, umfassend:
eine Ölwanne (12);
die Verstellölpumpe (100) gemäß einem der vorherigen Ansprüche, wobei die Ölpumpe konfiguriert ist, um Öl aus dem Ölsumpf in einen Einlass der Ölpumpe zu saugen und das Öl aus einem Auslass der Ölpumpe zu pumpen; und
einen Ölkanal (20), der konfiguriert ist, um unter Druck stehendes Öl aus dem Auslass der Ölpumpe aufzunehmen.

13. Kraftfahrzeug gemäß Anspruch 12, wobei das Schmiersystem ferner einen Ölfilter (802) umfasst, der funktionsfähig zwischen dem Auslass der Ölpumpe und dem Ölkanal angeordnet ist, wobei der Ölfilter konfiguriert ist, um feste Verunreinigungen aus dem Öl zu filtern, das aus dem Pumpenauslass austritt.

## Revendications

1. Une pompe à huile à déplacement variable (100) pour un véhicule à moteur, la pompe à huile comprenant :
un mécanisme (150) pour ajuster le déplacement de la pompe, le mécanisme comprenant un orifice d'huile (114) formé dans une paroi interne de la pompe ; et
un filtre (300) dans lequel une surface de filtrage (302) du filtre est espacée d'une ouverture (114a) de l'orifice d'huile et dans lequel la zone (305) de la surface de filtrage est plus grande qu'une zone de l'ouverture, dans laquelle le filtre est sensiblement en forme de prisme, et dans laquelle la surface de filtrage du filtre forme une surface extérieure du prisme.

2. La pompe à huile selon la revendication 1, dans laquelle le filtre est supporté par un boîtier (101) de la pompe à huile à un endroit éloigné de l'ouverture de l'orifice d'huile.

3. La pompe à huile selon la revendication 1, dans laquelle le filtre comprend une fente longitudinale prévue à l'intérieur d'une surface extérieure du prisme, et dans laquelle le filtre est compressible en réduisant une largeur de la fente.

4. La pompe à huile selon la revendication 3, dans laquelle le filtre est disposé à l'intérieur de la pompe à huile de sorte que la fente longitudinale du filtre est sensiblement alignée avec l'orifice d'huile.

5. La pompe à huile selon l'une quelconque des revendications précédentes, dans laquelle le filtre est disposé de sorte qu'un axe longitudinal du filtre est à un angle par rapport à un trajet d'écoulement défini par l'orifice d'huile.

6. La pompe à huile selon l'une quelconque des revendications précédentes, dans laquelle le filtre est résilient et est configuré pour se dilater en raison de sa résilience afin d'engager une ou plusieurs parois de la pompe, de sorte que le filtre est supporté à l'intérieur de la pompe.

7. La pompe à huile selon l'une quelconque des revendications précédentes, dans laquelle un boîtier de la pompe définit une partie de chambre de filtre (550) configurée pour recevoir le filtre.

8. La pompe à huile selon la revendication 7, dans laquelle la partie de chambre de filtre définit un épaulement configuré pour venir en butée contre le filtre afin de retenir le filtre à l'intérieur de la partie de chambre de filtre.

9. La pompe à huile selon l'une quelconque des revendications précédentes, dans laquelle la pompe à huile comprend une chambre de pression (108), dans laquelle le déplacement de la pompe varie en fonction d'une pression d'huile à l'intérieur de la chambre de pression ; dans laquelle le filtre est configuré pour filtrer l'huile à l'intérieur de la chambre de pression.

10. La pompe à huile selon la revendication 9, dans laquelle l'orifice d'huile est défini à l'intérieur de la chambre de pression et est configuré pour permettre à l'huile de s'écouler hors de la chambre de pression afin d'affecter la pression de l'huile à l'intérieur de la chambre de pression.

11. La pompe à huile selon la revendication 9 ou 10, dans laquelle le filtre est prévu à l'intérieur de la chambre de pression.

12. Un véhicule à moteur comprenant :
un carter d'huile (12) ;
la pompe à huile à déplacement variable (100) selon l'une quelconque des revendications précédentes, dans lequel
la pompe à huile est configurée pour aspirer l'huile du carter d'huile dans une entrée de la pompe à huile et pour pomper l'huile hors d'une sortie de la pompe à huile ; et
une canalisation d'huile (20) configurée pour recevoir de l'huile sous pression de la sortie de la pompe à huile.

13. Le véhicule à moteur selon la revendication 12, dans lequel le système de lubrification comprend en outre un filtre à huile (802) disposé de manière fonctionnelle entre la sortie de la pompe à huile et la canalisation d'huile, dans lequel le filtre à huile est configuré pour filtrer les contaminants solides à partir de l'huile quittant la sortie de la pompe.
